# FASCICULE DE BREVET EUROPEEN

(11) **EP 0 468 869 B1**
(45) Date de publication et mention de la délivrance du brevet: **22.06.1994**
(21) Numéro de dépôt: 91402028.4
(22) Date de dépôt: 22.07.1991
(51) Int. Cl.: H02B 1/42, H02G 3/14

(54) **Plaque pour appareil électrique, et support correspondant**
Platte für elektrisches Gerät und dazu gehörende Haltevorrichtung
Board for electrical apparatus and corresponding support

(30) Priorité: 24.07.1990 FR 9009451
(43) Date de publication de la demande: 29.01.1992
(73) Titulaire: LEGRAND, F-87045 Limoges Cédex (FR)
(72) Inventeur: Besse, Christian, F-87000 Limoges (FR)
(74) Mandataire: CABINET BONNET-THIRION

(56) Documents cités:
- AU-A- 34 098
- FR-A- 1 369 290
- GB-A- 1 390 758
- US-A- 3 859 454

## Description

La présente invention concerne d'une manière générale les appareils électriques, tels qu'interrupteurs, prises de courant ou autres, et elle vise plus particulièrement ceux de ces appareils électriques qui sont à encastrer dans un quelconque logement, par exemple dans une boîte d'encastrement engagée à ras dans une quelconque cloison ou dans une quelconque goulotte.

Plus particulièrement, encore, la présente invention concerne le cas où la fixation à cette boîte d'encastrement du mécanisme de l'appareil électrique concerné se fait par l'intermédiaire d'un support, qui, en forme générale de cadre, comporte une ouverture centrale pour le passage de ce mécanisme, et sur lequel est encliquetée, autour de la partie de l'appareil électrique accessible à l'usager, une plaque, elle-même en forme générale de cadre, destinée à assurer, suivant une certaine esthétique, l'habillage de l'ensemble.

Globalement, cette plaque comporte une paroi de façade ajourée d'une ouverture centrale propre à donner accès à l'appareil électrique concerné, un rebord bordant cette paroi de façade sur une portion au moins de sa périphérie, et des moyens d'encliquetage propres à permettre de la rapporter sur le support de l'appareil électrique.

Le plus souvent, ces moyens d'encliquetage sont constitués par deux pattes élastiquement déformables, qui sont présentes en saillie sur la face interne de la paroi de façade, en général en bordure de son ouverture centrale, et par laquelle la plaque correspondante est adaptée à pouvoir venir en prise avec le support sous-jacent.

C'est le cas par exemple dans le brevet français qui, déposé sous le n° 70 07708, a été publié sous le n° 2 082 120.

Ces pattes élastiquement déformables, qui ont nécessairement une certaine longueur, ont pour inconvénient d'être plus ou moins fragiles.

En outre, du fait même de la saillie qu'elles forment, elles rendent difficile l'empilage des plaques lors de leur stockage.

Enfin, et surtout, formant une surépaisseur sur la surface interne de la paroi de façade, elles sont fréquemment l'origine de retassures disgracieuses à la surface externe de celle-ci, lorsque, comme cela est en pratique le cas le plus général, les plaques correspondantes sont réalisées par moulage d'une quelconque matière synthétique appropriée.

De même, lorsque, comme décrit par exemple dans le certificat d'utilité français qui, déposé sous le No 78 16318, a été publié sous le No 2.410.942, les moyens d'encliquetage présentent des bossages en saillie sur la surface interne de la paroi de façade, ces bossages peuvent, eux aussi, pour les mêmes raisons que précédemment, être à l'origine de retassures à sa surface externe.

La présente invention a d'une manière générale pour objet une disposition permettant d'éviter ces inconvénients et conduisant en outre à d'autres avantages.

De manière plus précise, elle a tout d'abord pour objet une plaque pour appareil électrique du genre comportant une paroi de façade ajourée d'une ouverture centrale propre à donner accès à l'appareil électrique concerné, un rebord bordant cette paroi de façade sur une portion au moins de sa périphérie, et des moyens d'encliquetage propres à permettre de la rapporter sur le support de cet appareil électrique, cette plaque étant d'une manière générale caractérisée en ce que ces moyens d'encliquetage comportent une pluralité de crans présents sur la surface interne du rebord, en au moins deux zones de celui-ci opposées l'une par rapport à l'autre.

N'impliquant en pratique qu'une surépaisseur locale relativement modérée de ce rebord, ces crans ne sont normalement avantageusement pas susceptibles de donner naissance à des retassures à sa surface externe.

Mais, en toute hypothèse, n'affectant alors que les flancs latéraux de la plaque, ces retassures ne seraient de toute façon que peu apparentes.

En pratique, chaque zone concernée du rebord comporte une pluralité de crans échelonnés transversalement sur une partie au moins de sa hauteur.

Il en résulte avantageusement la possibilité d'une adaptation en position de la plaque suivant l'invention par rapport à la surface sous-jacente, et, donc, la possibilité d'un éventuel rattrapage en distance rendu par exemple souhaitable par suite de l'application d'un quelconque revêtement à cette surface.

Préférentiellement, et suivant un développement de l'invention, les zones au moins du rebord présentant ainsi des crans sont d'un seul tenant avec une semelle qui, distincte de la paroi de façade de la plaque tout en étant solidaire de celle-ci, double cette paroi de façade sur une partie au moins de sa surface interne.

Si désiré, le matériau constitutif de cette semelle, et donc celui des crans qui en sont solidaires, peut être différent de celui de la paroi de façade, l'ensemble résultant par exemple d'un moulage bi-matière.

Outre qu'il est ainsi possible de réaliser les crans à l'aide d'une matière plus appropriée à leur fonction technique d'encliquetage que celle devant corollairement constituer la paroi de façade, il peut avantageusement résulter de la disposition correspondante un effet esthétique particulier, notamment si elle est étendue à l'ensemble du rebord.

En effet, celui-ci constituant alors la partie apparente de la semelle, sur les flancs de la plaque, il suffit, pour ce faire, de choisir, pour le matériau constitutif de cette semelle, une couleur distincte de celle du matériau constitutif de la paroi de façade.

En outre, sa paroi de façade peut ainsi être en tout point d'épaisseur constante, ce qui élimine tout risque qu'apparaisse à sa surface externe une quelconque retassure.

En bref, la plaque suivant l'invention peut ainsi avoir si désiré des chants de couleur différente.

La présente invention a encore pour objet un support pour appareil électrique, qui, du genre comportant une ouverture centrale pour le passage du mécanisme de l'appareil électrique concerné, est d'une manière générale caractérisé en ce que pour coopération avec une plaque du type de celle succinctement exposée, il comporte, disposées chacune respectivement en deux zones opposées de sa périphérie, deux languettes sur lesquelles cette plaque est apte à s'encliqueter par ses crans.

Préférentiellement, ces languettes s'étendent en oblique vers l'extérieur, en divergeant l'une par rapport à l'autre, et leur inclinaison est telle que la pente qui en résulte pour leur tranche libre est comparable à celle des flancs des crans de la plaque associée.

Ainsi, c'est, avantageusement, par cette tranche libre, et non pas par une arête, que ces languettes coopèrent avec ces flancs, sans risquer d'endommager ceux-ci.

L'incidence à ce sujet d'éventuelles bavures le long d'une telle arête se trouve notamment ainsi avantageusement minimisée.

En outre, les languettes mises en oeuvre concourent avantageusement à un rigidification bénéfique du support qu'elles affectent.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est, avec un arrachement local, une vue en perspective éclatée d'une plaque suivant l'invention et du support adapté à la recevoir ;
la figure 2 est une vue en élévation, vue de l'arrière, suivant la flèche II de la figure 1, de cette plaque ;
la figure 3 en est une vue en coupe transversale, suivant la ligne brisée III-III de la figure 2 ;
la figure 4 en est, à échelle supérieure, une vue partielle en coupe transversale, suivant la ligne IV-IV de la figure 2 ;
la figure 5 est, à l'échelle de la figure 4, une vue partielle en coupe transversale du support concerné, suivant la ligne V-V de la figure 1 ;
la figure 6 est, à l'échelle des figures 4 et 5, une vue partielle en coupe transversale illustrant l'encliquetage de la plaque suivant l'invention sur le support sur lequel elle doit être rapportée.

Tel qu'illustré sur ces figures, la plaque 10 suivant l'invention, est destinée à être rapportée sur un support 11, propre lui-même à recevoir un quelconque appareil électrique, non représenté, et elle comporte, globalement, de manière connue en soi, une paroi de façade 12, qui est ajourée d'une ouverture centrale 13 propre à donner accès à l'appareil électrique concerné, un rebord 14, qui borde cette paroi de façade 12 sur une portion au moins de sa périphérie, en saillie sur sa surface interne, et des moyens d'encliquetage, qui, suivant des modalités décrites plus en détail ultérieurement, sont propres à permettre de la rapporter, comme recherché, sur le support 11.

Dans la forme de réalisation représentée, la plaque 10 a un contour globalement quadrangulaire, et il en est de même pour l'ouverture centrale 13 de sa paroi de façade 12.

En outre, dans cette forme de réalisation, le rebord 14 se réduit à deux joues 15 parallèles, et, transversalement entre ces joues 15, la paroi de façade 12 est, à l'une et l'autre de ses extrémités, globalement cintrée, avec des bords libres 16 sensiblement à niveau avec celui 17 de celles-ci.

Autrement dit, le rebord 14 ne s'étend, et donc n'existe, sous la forme de joues 15, que sur deux côtés opposés de la paroi de façade 12.

En pratique, dans la forme de réalisation représentée, les joues 15 qui le constituent sont légèrement en retrait par rapport à la tranche 18 correspondante de la paroi de façade 12.

Enfin, dans cette forme de réalisation, l'ouverture centrale 13 de cette paroi de façade 12 est elle-même bordée, mais sur ses quatre côtés, par un rebord 19.

Suivant l'invention, les moyens d'encliquetage que comporte la plaque 10 ainsi constituée pour être rapportée sur le support 11 auquel elle est associée comportent une pluralité de crans 20 présents sur la surface interne du rebord 14, en au moins deux zones Z de celui-ci opposées l'une par rapport à l'autre.

Dans la forme de réalisation représentée, le rebord 14 ne s'étendant comme indiqué que sur deux côtés opposés de la paroi de façade 12, il est prévu des crans 20 en quatre zones Z de ce rebord 14, à raison de deux par chacun des côtés concernés de cette paroi de façade 12, et, d'un de ces côtés à l'autre, ces zones Z sont en correspondance les unes avec les autres.

Autrement dit, les zones Z sont globalement disposées au sommet d'un rectangle.

En pratique, chacune de ces zones Z comporte une pluralité de crans 20 échelonnés transversalement en hauteur sur une partie au moins de la hauteur du rebord 14, et ils sont formés à la faveur d'une surépaisseur locale 22, formant bossage, de celui-ci.

Dans la forme de réalisation représentée, quatre crans 20 sont ainsi prévus à chaque zone Z, et ils définissent deux à deux entre eux trois gorges 23.

A l'exception du premier, c'est-à-dire de celui qui est le plus proche du bord libre 17 du rebord 14, les crans 20 d'une même zone Z sont des crans symétriques.

Autrement dit, les flancs qui les constituent ont, en valeur absolue, une même pente.

Par exemple, cette pente est proche de 55°.

Mais il va de soi que cette valeur n'est pas limitative de l'invention.

Préférentiellement, et tel que représenté, le flanc d'attaque 24 du premier cran 20, tel que défini ci-dessus, d'une même zone Z, se raccorde en continu avec un congé de raccordement 25 émoussant localement l'arête 26 correspondante du bord libre 17 du rebord 14. Préférentiellement, également, et tel qu'également représenté, les crans 20 d'une même zone Z sont de hauteur progressivement décroissante à compter du bord libre 17 de ce rebord 14.

Ainsi l'effort d'encliquetage ou d'arrachement correspondant reste avantageusement constant.

Par ailleurs, dans la forme de réalisation représentée, les zones Z, au moins, du rebord 14 présentant ainsi des crans 20 sont d'un seul tenant avec une semelle 28, qui, distincte de la paroi de façade 12, tout en étant solidaire de celle-ci, double cette paroi de façade 12 sur une partie au moins de sa surface interne.

En pratique, c'est tout le rebord 14 qui, dans son ensemble, est d'un seul tenant avec cette semelle 28.

Autrement dit, les joues 15 constitutives de ce rebord 14 sont solidaires de celle-ci.

Il en est de même pour le rebord 19 bordant l'ouverture centrale 13 de la paroi de façade 12.

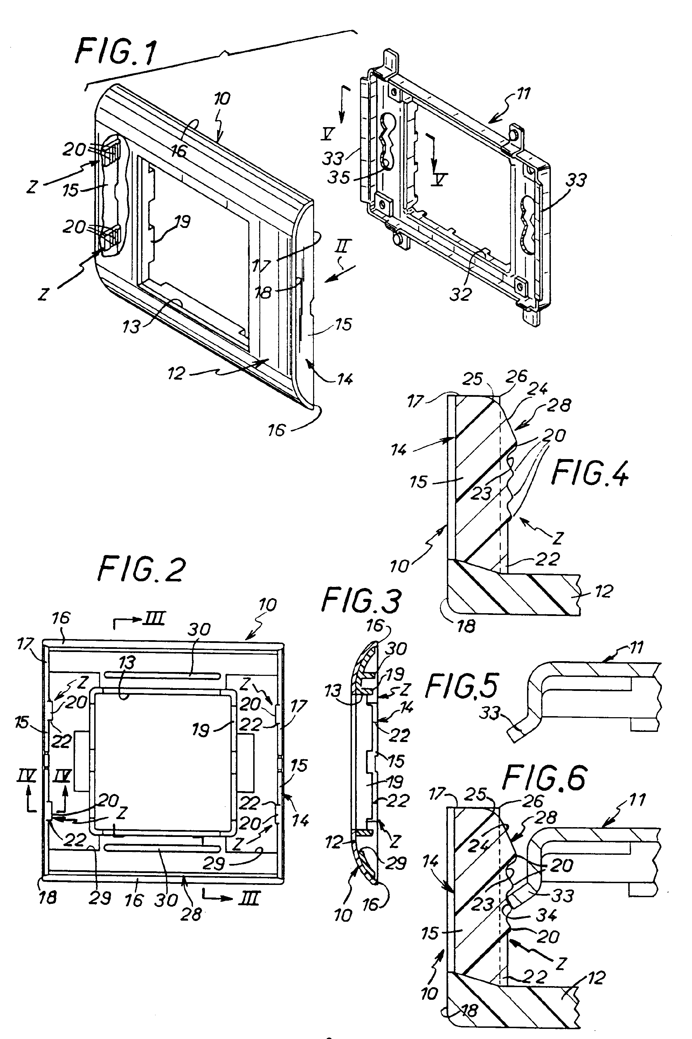

Mais, entre ce rebord 18 et les joues 15, cette semelle 28 comporte des ajours 29, figures 2 et 3.

Elle présente, enfin, pour son raidissement, dans la forme de réalisation représentée, en saillie sur sa surface interne, entre ces ajours 29, des nervures 30.

Si désiré, et tel que schématisé par des hachures différentes sur les figures, le matériau constitutif de la semelle 28 est différent de celui de la paroi de façade 12.

Ainsi, la plaque 10 suivant l'invention présente, latéralement, sur ses flancs, des chants de couleur différente.

En outre, la paroi de façade 12 étant par elle-mêmes en tout point d'épaisseur constante, il n'y a aucune risque qu'y apparaisse en surface une quelconque retassure.

En pratique, la plaque 10 suivant l'invention peut être réalisée par un moulage bi-matière.

De son côté, le support 11, qui est lui aussi globalement quadrangulaire, en comportant lui aussi une ouverture centrale 32 globalement quadrangulaire pour le passage du mécanisme de l'appareil électrique concerné, comporte, suivant l'invention, disposées chacune respectivement en deux zones opposées de sa périphérie, deux languettes 33 sur lesquelles la plaque 10 est apte à s'encliqueter par ses crans 20.

En pratique, ces languettes 33 s'étendent sur la quasi totalité de la longueur de deux côtés opposés de la périphérie du support 11.

Préférentiellement, et tel que représenté, elles s'étendent en oblique vers l'extérieur, en divergeant l'une par rapport à l'autre, avec une inclinaison telle que la pente de leur tranche 34 est comparable à celle des flancs des crans 20 de la plaque 10.

Leur inclinaison est donc voisine de 35° dans l'exemple précédemment donné.

Bien entendu, comme il est usuel, le support 11 est en général métallique.

Les autres caractéristiques de ce support 11 ne relevant pas de la présente invention, elles ne seront pas décrites ici.

Il sera toutefois noté que, ce support 11 présentant, latéralement, de manière usuelle, des perçages 35 qui, globalement allongés en boutonnière, sont destinés à permettre de le rapporter sur un quelconque autre support, et par exemple sur une boîte d'encastrement, les languettes 33 s'étendent le long des côtés le long desquels s'étendent également ces perçages 35.

Ainsi, grâce à ces languettes 33, le support 11 se trouve avantageusement renforcé et rigidifié dans la partie où il se trouve par ailleurs inévitablement plus ou moins affaibli par ses perçages 35.

## Revendications

1. Plaque pour appareil électrique, du genre comportant une paroi de façade (12) ajourée d'une ouverture centrale (13) propre à donner accès à l'appareil électrique concerné, un rebord (14) bordant cette paroi de façade (12) sur une portion au moins de sa périphérie, et des moyens d'encliquetage propres à permettre de la rapporter sur le support (11) dudit appareil électrique, caractérisée en ce que lesdits moyens d'encliquetage comportent une pluralité de crans (20) présents sur la surface interne dudit rebord (14), en au moins deux zones (Z) de celui-ci opposées l'une par rapport à l'autre.

2. Plaque suivant la revendication 1, caractérisée en ce que, le rebord (14) s'étendant sur au moins deux côtés opposés de la paroi de façade (12), il est prévu des crans (20) en quatre zones (Z) de ce rebord (14), à raison de deux par côté, et d'un des côtés à l'autre, lesdites zones (Z) sont en correspondance les unes avec les autres.

3. Plaque suivant l'une quelconque des revendications 1, 2, caractérisée en ce que chaque zone (Z) concernée du rebord (14) comporte une pluralité de crans (20) échelonnés transversalement en hauteur sur une partie au moins de la hauteur de ce rebord (14).

4. Plaque suivant la revendication 3, caractérisée en ce que les crans (20) d'une même zone (Z) sont de hauteur progressivement décroissante à compter du bord libre (17) du rebord (14).

5. Plaque suivant l'une quelconque des revendications 3, 4, caractérisée en ce que, à l'exception, éventuellement, du premier, les crans (20) d'une même zone (Z) sont des crans symétriques.

6. Plaque suivant l'une quelconque des revendications 3 à 5, caractérisée en ce que le flanc d'attaque du premier cran (20) d'une même zone (Z), c'est-à-dire celui des crans (20) d'une telle zone (Z) qui est le plus proche du bord libre (17) du rebord (14), se raccorde en continu avec un congé de raccordement (25) émoussant localement l'arête (26) correspondante de celui-ci.

7. Plaque suivant l'une quelconque des revendications 1 à 6, caractérisée en ce que les crans (20) d'une même zone (Z) sont formés à la faveur d'une surépaisseur locale (22), formant bossage, du rebord (14).

8. Plaque suivant l'une quelconque des revendications 1 à 7, caractérisée en ce que les zones (Z) au moins du rebord (14) présentant des crans (20) sont d'un seul tenant avec une semelle (28) qui, distincte de la paroi de façade (12) tout en étant solidaire de celle-ci, double cette paroi de façade (12) sur une partie au moins de sa surface interne.

9. Plaque suivant la revendication 8, caractérisée en ce que le rebord (14), dans son ensemble, est d'un seul tenant avec ladite semelle (28).

10. Plaque suivant l'une quelconque des revendications 8, 9, caractérisée en ce que le matériau constitutif de ladite semelle (28) est différent de celui de la paroi de façade (12).

11. Plaque suivant l'une quelconque des revendications 1 à 10, caractérisée en ce que le rebord (14) se réduit à deux joues (15) parallèles et, transversalement entre ces joues (15), la paroi de façade (12) est globalement cintrée, avec ses bords libres (16) à niveau avec celui de celles-ci.

12. Support pour appareil électrique, du genre comportant une ouverture centrale (32) pour le passage du mécanisme de l'appareil électrique concerné, caractérisé en ce que, pour coopération avec une plaque (10) conforme à l'une quelconque des revendications 1 à 11, il comporte, disposées chacune respectivement en deux zones opposées de sa périphérie, deux languettes (33) sur lesquelles ladite plaque (10) est apte à s'encliqueter par ses crans (20).

13. Support suivant la revendication 12, caractérisé en ce que ses languettes (33) s'étendent en oblique vers l'extérieur, en divergeant l'une par rapport à l'autre.

14. Support suivant la revendication 13, caractérisé en ce que l'inclinaison de ses languettes (33) est telle que la pente de leur tranche est comparable à celle des flancs des crans (20) de la plaque (10) associée.

15. Support suivant l'une quelconque des revendications 12 à 14, caractérisé en ce que, comportant des perçages (35) destinés à permettre de le rapporter sur un quelconque autre support, ses dites languettes (33) s'étendent le long des côtés le long desquels s'étendent également ces perçages (35).

## Patentansprüche

1. Platte für ein elektrisches Gerät der Art mit einer Vorderwand (12), die von einer mittigen Öffnung (13) durchbrochen ist, welche geeignet ist, Zugang zu dem betroffenen elektrischen Gerät zu schaffen, einer Leiste (14), die diese Vorderwand (12) zumindest in einem Bereich ihres Umfangs begrenzt, und Rastmitteln, die geeignet sind, sie an dem Träger (11) des elektrischen Geräts zu halten,
dadurch **gekennzeichnet**,
daß die Rastmittel eine Mehrzahl von Rastkerben (20) besitzen, die an der Innenwand der Leiste (14) in mindestens zwei Zonen (Z) von dieser einander gegenüberliegend vorgesehen sind.

2. Platte nach Anspruch 1,
dadurch **gekennzeichnet**,
daß sich die Leiste (14) an zumindest zwei gegenüberliegenden Seiten der Vorderwand (12) erstreckt und Rastkerben (20) in vier Zonen (Z) der Leiste (14) im Verhältnis zwei pro Seite vorgesehen sind, und von einer der Seiten zur anderen die Zonen (Z) einander entsprechen.

3. Platte nach irgendeinem der Ansprüche 1, 2
dadurch **gekennzeichnet**,
daß jede betroffene Zone (Z) der Leiste (14) eine Mehrzahl von Rastkerben besitzt, die quer in der Höhe zumindest in einem Teil der Höhe der Leiste (14) abgestuft sind.

4. Platte nach Anspruch 3,
dadurch **gekennzeichnet**,
daß die Rastkerben (20) einer Zone (Z) von progressiv abnehmender Höhe beginnend von der freien Kante (17) der Leiste (14) sind.

5. Platte nach irgendeinem der Ansprüche 3, 4,
dadurch **gekennzeichnet**,
daß evtl. mit Ausnahme der ersten die Rastkerben (20) einer selben Zone (Z) symmetrische Rastkerben sind.

6. Platte nach irgendeinem der Ansprüche 3 bis 5,
dadurch **gekennzeichnet**,
daß die Angriffsflanke der ersten Rastkerbe (20) einer selben Zone (Z), d. h. diejenige der Rastkerben (20) einer solchen Zone (Z), die am nächsten zu der freien Kante (17) der Leiste (14) liegt, sich im Anschluß mit einem Verbindungsübergang (25), der lokal den entsprechenden Anschlag (26) von dieser abrundet, fortsetzt.

7. Platte nach irgendeinem der Ansprüche 1 bis 6,
dadurch **gekennzeichnet**,
daß die Rastkerben (20) einer selben Zone (Z) mittels einer örtlichen Überdicke (22) der Leiste (14), die einen Buckel bildet, gebildet sind.

8. Platte nach irgendeinem der Ansprüche 1 bis 7,
dadurch **gekennzeichnet**,
daß die Zonen (Z) zumindest der Leiste (14), die Rastkerben (20) besitzen, einstückig mit einer Schwelle (28) ausgebildet sind, die, sich von der Vorderwand (12) unterscheidend aber aus einem Stück mit dieser bestehend, die Vorderwand (12) zumindest in einem Bereich ihrer Innenseite verdoppelt.

9. Platte nach Anspruch 8,
dadurch **gekennzeichnet**,
daß die Leiste (14) einstückig mit der Schwelle (28) gebildet ist.

10. Platte nach irgendeinem der Ansprüche 8, 9,
dadurch **gekennzeichnet**,
daß das Material, aus dem die Schelle 28 besteht, unterschiedlich von dem der Vorderwand (12) ist.

11. Platte nach irgendeinem der Ansprüche 1 bis 10,
dadurch **gekennzeichnet**,
daß die Leiste (14) sich in zwei parallele Seitenwände (15) reduziert und die Vorderwand (12) quer zwischen den Seitenwänden (15) im wesentlichen gebogen ist, wobei die freien Kanten (16) auf der gleichen Höhe wie diejenigenvon diesen liegen.

12. Träger für ein elektrisches Gerät der Art mit einer mittigen Öffnung 32 zur Durchführung des Mechanismus des betroffenen elektrischen Geräts,
dadurch **gekennzeichnet**,
daß er zum Zusammenwirken mit einer Platte (10) nach irgendeinem der Ansprüche 1 bis 11 zwei Zungen (33) besitzt, von denen jede jeweils in zwei gegenüberliegenden Zonen seines Umfangs angeordnet sind und an denen sich die Platte (12) mit den Rastkerben (20) einrasten kann.

13. Träger nach Anspruch 12,
dadurch **gekennzeichnet**,
daß sich seine Zungen (33) schräg nach außen erstrecken, wobei sie voneinander divergieren.

14. Träger nach Anspruch 13,
dadurch **gekennzeichnet**,
daß die Neigung der Zungen (33) so ist, daß die Neigung ihres Streifens vergleichbar mit der der Flanken der Rastkerben (20) der zugeordneten Platte (10) ist.

15. Träger nach irgendeinem der Ansprüche 12 bis 14,
dadurch **gekennzeichnet**,
daß er Bohrungen (35) besitzt, die dazu bestimmt sind, ihn an irgendeinem anderen Träger zu halten, und daß sich die Zungen (33) entlang der Seiten erstrecken, entlang derer sich gleicherweise diese Bohrungen (35)erstrecken.

## Claims

1. A board for a piece of electrical equipment, of the kind comprising a front wall (12) provided with a central opening (13) which gives access to the piece of electrical equipment in question, a raised edge (14) which borders the front wall (12) over at least part of its periphery, and clip means capable of enabling it to be connected to the support (11) of said piece of electrical equipment, characterised in that said clip means comprise a plurality of catches (20) which are present on the inner surface of said raised edge (14), in at least two zones (Z) of that raised edge, in opposite relationship to each other.

2. A board according to Claim 1, characterised in that the raised edge (14) extends over at least two oppositely disposed sides of the front wall (12) and catches (20) are provided in four zones (Z) of the raised edge (14), with two catches being provided on each side, and said zones (Z) on the two sides are in corresponding relationship.

3. A board according to any one of Claims 1, 2, characterised in that each zone (Z) in question of the raised edge (14) comprises a plurality of catches (20) which are staggered transversely over the height of part, at least, of the height of the raised edge (14).

4. A board according to Claim 3, characterised in that the catches (20) of one and the same zone (Z) gradually decrease in height from the free edge (17) of the raised edge (14).

5. A board according to any one of Claims 3, 4, characterised in that possibly with the exception of the first catch, the catches (20) in one and the same zone (Z) are symmetrical catches.

6. A board according to any one of Claims 3 to 5, characterised in that the attack side of the first catch (20) in one and the same zone (Z), that is to say that of the catches (20) of one such zone (Z) which is closest to the free edge (17) of the raised edge (14), is joined continuously to a connecting groove (25) which provides a local bevelling on the ridge (26) corresponding to it.

7. A board according to any one of Claims 1 to 6, characterised in that the catches (20) in one and the same zone (Z) are formed by virtue of a local region of increased thickness (22), forming a boss, of the raised edge (14).

8. A board according to any one of Claims 1 to 7, characterised in that the zones (Z), at least of the raised edge (14) with catches (20) are integral with a base plate (28), which, separate from the front wall (12) but being fixed to it, forms a covering over part, at least, of the inner surface of the front wall (12).

9. A board according to Claim 8, characterised in that the raised edge (14) is overall integral with said base plate (28).

10. A board according to any one of Claims 8, 9, characterised in that the material of which said base plate (28) is made is different from that of the front wall (12).

11. A board according to any one of Claims 1 to 10, characterised in that the raised edge (14) is reduced to two parallel side portions (15), and, transversely between the side portions (15), the front wall (12) is overall curved, with its free edges (16) being level with the edge of the side portions.

12. A support for a piece of electrical equipment, of the kind comprising a central opening (32) for the mechanism of the piece of electrical equipment in question to pass through, characterised in that in order to cooperate with a board (10) according to any one of Claims 1 to 11, the support comprises two strip portions (33), each of which is disposed respectively in two oppositely disposed zones on the periphery of the support, and said board (10) is capable of clipping onto the strip portions by virtue of its catches (20).

13. A support according to Claim 12, characterised in that its strip portions (33) extend obliquely outwardly, diverging from each other.

14. A support according to Claim 13, characterised in that the inclination of the strip portions (33) is such that the slope formed by their edges is comparable to that of the sides of the catches (20) on the associated board (10).

15. A support according to any one of Claims 12 to 14, characterised in that holes (35) are provided to enable the support to be connected to another support of some kind, and said strip portions (33) extend along the sides along which the holes (35) also extend.
